# DEMANDE DE BREVET EUROPEEN

(11) **EP 3 106 930 A1**
(43) Date de publication de la demande: **21.12.2016**
(21) Numéro de dépôt: 15172330.1
(22) Date de dépôt: 16.06.2015
(51) Int. Cl.: G04B 17/34, G04B 13/02

(54) **PROCÉDÉ DE FABRICATION COMPORTANT UNE ÉTAPE D'USINAGE MODIFIÉE**

(71) Demandeur: Nivarox-FAR S.A., 2400 Le Locle (CH)
(72) Inventeur: Cusin, Pierre, 1423 Villars-Burquin (CH); Cretenet, Davy, 25650 La Chaux-de-Gilley (FR); Stranczl, Marc, 1260 Nyon (CH); Garret, Raphaël, 2300 La Chaux-de-Fonds (CH)
(74) Mandataire: Couillard, Yann Luc Raymond

(57) **Abrégé**

L'invention se rapporte à un procédé de fabrication d'une pièce destinée à être soudée comportant une étape d'usinage finale apte à réduire la surface de contact de la face qui doit être soudée.

## Description

### Domaine de l'invention

L'invention se rapporte à un procédé de fabrication d'une face destinée à être soudée et, plus précisément, une telle face comportant une planéité de surface améliorée.

### Arrière-plan de l'invention

Il est connu du document PCT/EP2015/061774 de former un composant horloger à partir d'une pièce comportant un matériau à base de silicium ou de céramique qui est directement soudé par rayonnement électromagnétique sur une autre pièce comme, par exemple, un métal ou un alliage métallique.

Dans le cadre de ce développement, il est apparu important que l'interstice entre les pièces ne devait pas excéder 0,5 micromètre sous peine que celles-ci ne puissent pas être soudées.

### Résumé de l'invention

Le but de la présente invention est de pallier tout ou partie les inconvénients cités précédemment en proposant un nouveau procédé de fabrication avec au moins une surface de contact comportant une planéité améliorée permettant l'assemblage des pièces par soudage.

A cet effet, selon un premier mode de réalisation, l'invention se rapporte à un procédé de fabrication d'une pièce comportant les étapes suivantes :
- se munir d'une barre ;
- décolleter la barre pour former au moins un diamètre comportant une surface sensiblement verticale et une surface sensiblement horizontale ;
caractérisé en ce que le procédé comporte en outre l'étape suivante :
- usiner ladite surface sensiblement horizontale afin de former une surface plane sous la surface sensiblement horizontale.

Selon le premier mode de réalisation, le procédé de fabrication permet d'offrir une face avec une surface parfaitement plane et perpendiculaire garantissant son soudage.

De plus, selon un deuxième mode de réalisation, l'invention se rapporte à un procédé de fabrication d'une pièce comportant les étapes suivantes :
- se munir d'une barre ;
- décolleter la barre pour former au moins un diamètre comportant une surface sensiblement verticale et une surface sensiblement horizontale ;
caractérisé en ce que le procédé comporte en outre l'étape suivante :
- usiner ladite surface sensiblement horizontale afin de réduire ladite surface sensiblement horizontale.

Selon le deuxième mode de réalisation, le procédé de fabrication permet avantageusement d'offrir une face avec une surface de soudage réduite pour diminuer l'interstice à une valeur garantissant son soudage.

Enfin, quel que soit le mode de réalisation, l'invention se rapporte à un procédé de fabrication d'un composant horloger comportant les étapes suivantes :
- former une première pièce à base de métal à partir du procédé selon l'une des revendications précédentes et une deuxième pièce ;
- monter une surface de la première pièce sur une surface de la deuxième pièce ;
- souder, par rayonnement électromagnétique du type laser, la surface de la première pièce montée sur la surface de la deuxième pièce afin de les solidariser.

Conformément à d'autres variantes avantageuses de l'invention :
- la deuxième pièce est à base de silicium ou à base de céramique ;
- la deuxième pièce comporte en outre au moins un revêtement partiel de métal, d'oxyde de silicium, de nitrure de silicium, de carbure de silicium ou d'un allotrope du carbone ;
- la première pièce comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une vue en perspective d'un résonateur balancier-spiral ;
- la figure 2 est une représentation en perspective d'un spiral selon l'invention ;
- la figure 3 est une représentation en perspective d'un arbre de balancier selon l'invention ;
- la figure 4 est une représentation en coupe d'un assemblage selon le document PCT/EP2015/061774 ;
- la figure 5 est une représentation en perspective d'un arbre selon un premier mode de réalisation de l'invention ;
- la figure 6 est une représentation en coupe d'un assemblage selon un premier mode de réalisation de l'invention ;
- la figure 7 est une représentation en perspective d'un arbre selon un deuxième mode de réalisation de l'invention ;
- la figure 8 est une représentation en coupe d'un assemblage selon un deuxième mode de réalisation de l'invention.

### Description détaillée des modes de réalisation préférés

L'invention se rapporte à un composant formé à l'aide d'une pièce dont le matériau ne comporte pas de domaine plastique utilisable, c'est-à-dire avec un domaine plastique très restreint, avec une deuxième pièce comportant le même type de matériau ou un autre type de matériau.

Ce composant a été imaginé pour des applications dans le domaine horloger et est rendu nécessaire par la part croissante que tiennent les matériaux fragiles comme ceux à base de silicium ou de céramique. On peut, à titre d'exemple, envisager de former un boîtier, un cadran, un réhaut, une glace, une lunette, un poussoir, une couronne, un fond de boîtier, une aiguille, un bracelet, un spiral, un balancier, une ancre, un pont, une masse oscillante ou même un mobile comme une roue d'échappement totalement ou partiellement à base de matériaux fragiles.

Préférentiellement, le matériau à base de silicium utilisé pour la réalisation du spiral compensateur peut être du silicium monocristallin quelle que soit son orientation cristalline, du silicium monocristallin dopé quelle que soit son orientation cristalline, du silicium amorphe, du silicium poreux, du silicium polycristallin, du nitrure de silicium, du carbure de silicium, du quartz quelle que soit son orientation cristalline ou de l'oxyde de silicium. Bien entendu d'autres matériaux peuvent être envisagés comme un verre, une céramique, un cermet, un métal ou un alliage métallique. De plus, la première pièce à base de silicium peut en outre comporter optionnellement au moins un revêtement partiel d'oxyde de silicium, de nitrure de silicium, de carbure de silicium ou d'un allotrope du carbone suivant les applications prévues du composant horloger.

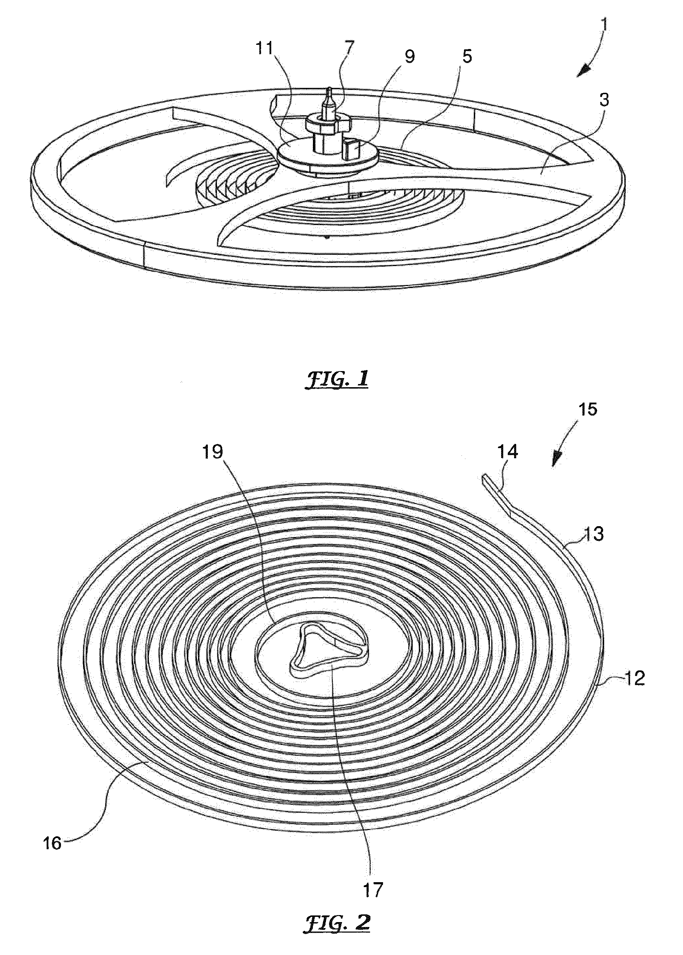

Par simplification, l'explication ci-dessous sera portée sur un assemblage entre un spiral et un arbre de balancier. A la figure 1, on peut voir un résonateur 1 dans lequel le spiral 5 est utilisé pour compenser thermiquement l'ensemble du résonateur 1, c'est-à-dire toutes les parties et notamment le balancier 3 monté sur le même arbre 7 de balancier. Le résonateur 1 coopère avec un système d'entretien comme, par exemple, un échappement à ancre suisse (non représenté) coopérant avec la cheville 9 du plateau 11 également monté sur l'arbre 7.

Un spiral compensateur 15 est mieux visible à la figure 2. Il comporte une lame unique 16 s'enroulant sur elle-même entre une spire interne 19 venue de forme avec une virole 17 et une spire externe 12 comportant une extrémité 14 destinée à être pitonnée. Comme visible à la figure 2, afin d'améliorer l'isochronisme du résonateur dans lequel est utilisé le spiral 15, ce dernier comporte une spire interne 19 comprenant une courbe du type Grossmann et une spire externe 12 comprenant une portion épaissie 13 par rapport au reste du spiral 15. Enfin, on peut voir que la virole 17 comporte une bande unique s'étendant selon une forme sensiblement triangulaire afin que la virole montre un caractère élastique lorsqu'elle est ajustée sur l'axe notamment pour autoriser son centrage par rapport à ce dernier.

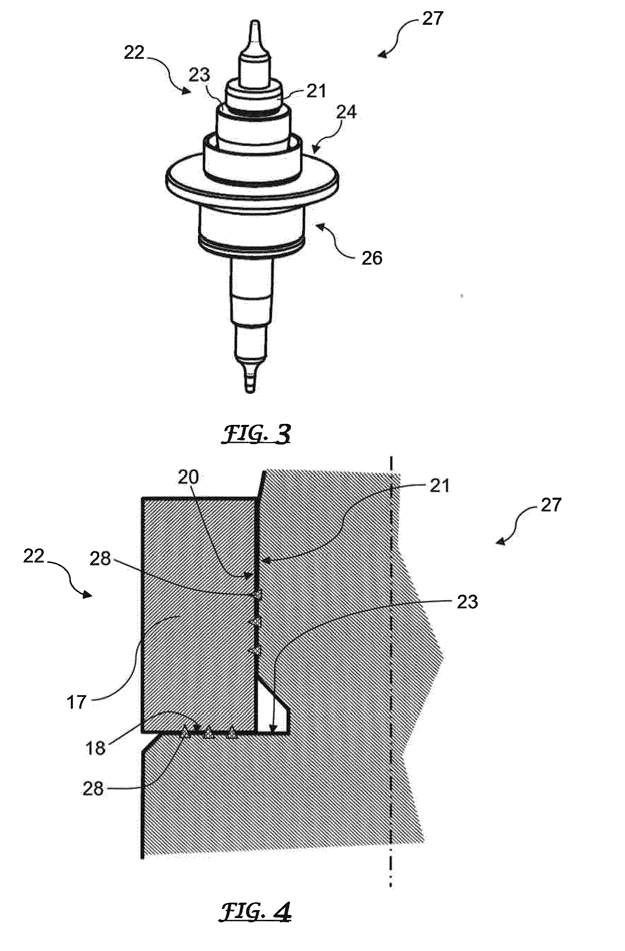

Un arbre 27 est mieux visible à la figure 3. Il comporte notamment plusieurs diamètres 22, 24, 26 destinés à recevoir respectivement le spiral, le balancier et le plateau. Comme illustré à la figure 3, le diamètre 22 comporte une tige 21 cylindrique bordée dans sa partie inférieure par une portée 23.

Comme illustré à la figure 4, le diamètre 22 est destiné à recevoir, entre la tige 21 et la portée 23, la virole 17 du spiral 15. Plus précisément, la face intérieure 20 de la virole 17 est plaquée élastiquement contre la surface externe de la tige 21 et la face inférieure 18 de la virole 17 est plaquée contre la portée 23. Enfin, comme visible sous la référence 28, la tige 21 et/ou la portée 23 sont soudés à la virole 17 comme enseigné dans le document PCT/EP2015/061774.

Toutefois, dans le cadre du développement de l'enseignement du document PCT/EP2015/061774, il est rapidement ressorti que l'interstice entre les pièces ne doit pas excéder 0,5 micromètre sous peine que celles-ci ne puissent pas être soudées.

Selon un premier mode de réalisation, le procédé de fabrication comporte une étape finale destinée à usiner la portée de l'arbre afin d'offrir une face avec une surface parfaitement plane et perpendiculaire pour diminuer l'interstice à une valeur inférieure ou égale à 0,5 micromètre.

Le procédé selon le premier mode de réalisation de l'invention comporte donc une première étape destinée à se munir d'une barre apte à subir un décolletage. L'exemple se rapportant à un assemblage entre un spiral et un arbre de balancier, la barre peut être à base de métal ou d'alliage métallique.

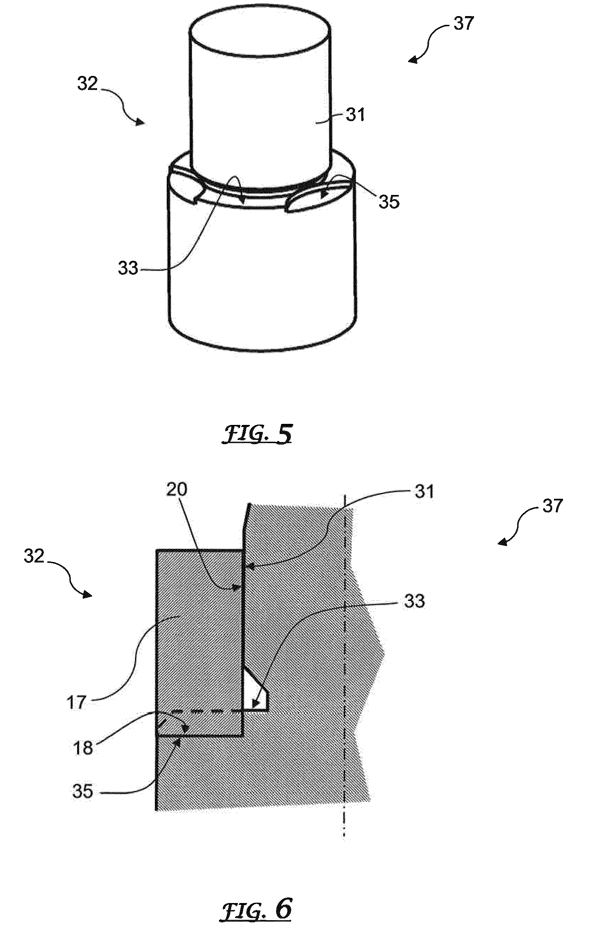

La deuxième étape est destinée à décolleter les différents diamètres nécessaires pour former l'arbre 37 de balancier et notamment le diamètre 32 apte à recevoir la virole 17 du spiral 15. A la figure 5, on peut voir que le diamètre 32 comporte une surface sensiblement verticale 31 formant une tige et une surface sensiblement horizontale formant une portée 33.

Le procédé peut optionnellement se poursuivre avec une étape de brunissage de la surface sensiblement verticale 31 pour augmenter sa dureté et améliorer son état de surface.

Après l'étape de décolletage ou, éventuellement, celle de brunissage, le procédé, selon le premier mode de réalisation, comporte une étape destinée à usiner ladite surface sensiblement horizontale afin de former une surface plane sous la surface sensiblement horizontale formant la portée 33. Comme visible à la figure 5, la surface 35 ainsi obtenue est parfaitement plane et perpendiculaire par rapport à la tige 31 afin de garantir son soudage avec la virole 17 du spiral 15.

On comprend donc que quelles soient les étapes précédentes du procédé, l'étape finale d'usinage permet de garantir une surface 35 parfaitement plane en fin de procédé pour y recevoir la virole 17 du spiral 15.

On comprend donc qu'après une étape de finition comportant, par exemple, une étape d'ébarbage, l'arbre obtenu 37 offre une surface 35 de soudage parfaitement plane garantissant un soudage avec une autre pièce comme enseigné dans le document PCT/EP2015/061774.

On comprend donc que, dans une étape finale de soudage, la virole 17 est ajustée sur le diamètre 32, c'est-à-dire que la face intérieure 20 de la virole 17 est plaquée élastiquement contre la surface externe de la tige 31 et que la face inférieure 18 de la virole 17 est plaquée contre la surface 35 dans un plan différent de la portée 33 comme illustré à la figure 6, puis est soudée par laser avec une garantie que le spiral 15 et l'arbre 37 soient solidarisés.

Selon un deuxième mode de réalisation, le procédé de fabrication comporte une étape finale destinée à usiner la portée de l'arbre afin d'offrir une surface de soudage réduite pour diminuer l'interstice à une valeur inférieure ou égale à 0,5 micromètre.

Le procédé selon le deuxième mode de réalisation de l'invention comporte donc une première étape destinée à se munir d'une barre apte à subir un décolletage. L'exemple se rapportant à un assemblage entre un spiral et un arbre de balancier, la barre peut être à base de métal ou d'alliage métallique.

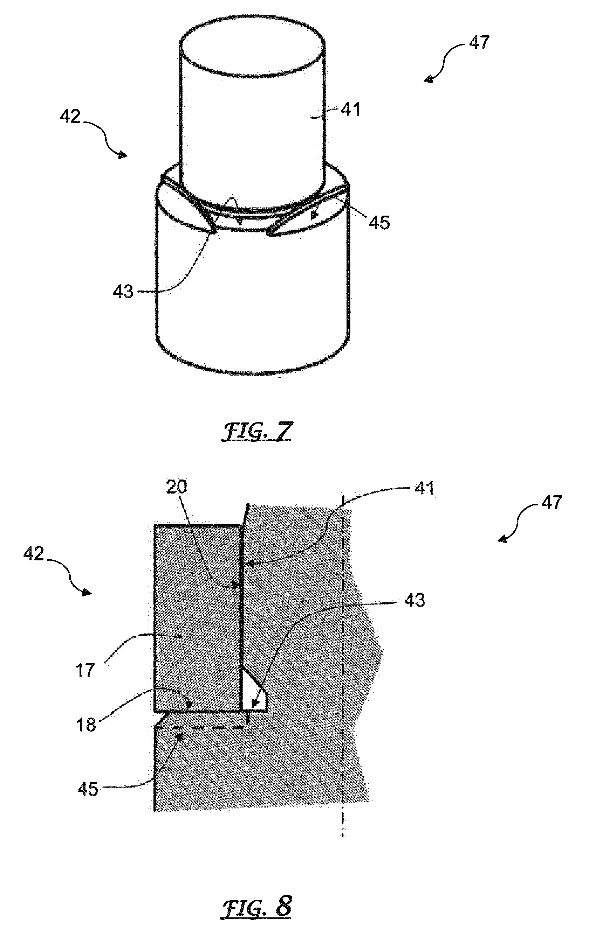

La deuxième étape est destinée à décolleter les différents diamètres nécessaires pour former l'arbre 47 de balancier et notamment le diamètre 42 apte à recevoir la virole 17 du spiral 15. A la figure 7, on peut voir que le diamètre 42 comporte une surface sensiblement verticale 41 formant une tige et une surface sensiblement horizontale 43 formant une portée.

Le procédé peut optionnellement se poursuivre avec une étape de brunissage de la surface sensiblement verticale 41 pour augmenter sa dureté et améliorer son état de surface.

Après l'étape de décolletage ou, éventuellement, celle de brunissage, le procédé, selon le deuxième mode de réalisation, comporte une étape destinée à usiner la surface sensiblement horizontale afin de réduire ladite surface sensiblement horizontale formant la portée 43. Comme visible à la figure 7, l'évidement 45 ainsi obtenu forme des plots au lieu d'une portée 43 continue afin de garantir leur soudage avec la virole 17 du spiral 15.

On comprend donc que l'arbre obtenu 47 offre des surfaces 43 discrètes de soudage à surface réduite pour diminuer l'interstice à une valeur inférieure ou égale à 0,5 micromètre. Ainsi, après une étape de finition comportant, par exemple, une étape d'ébarbage, l'arbre obtenu 47 offre des surfaces 43 de soudage garantissant un soudage avec une autre pièce comme enseigné dans le document PCT/EP2015/061774.

On comprend donc que, dans une étape finale de soudage, la virole 17 est ajustée sur le diamètre 42, c'est-à-dire que la face intérieure 20 de la virole 17 est plaquée contre la surface externe de la tige 41 et que la face inférieure 18 de la virole 17 est plaquée contre les portées 43 à surface réduite comme illustré à la figure 8, puis est soudée par laser avec une garantie que le spiral 15 et l'arbre 47 soient solidarisés.

Bien entendu, la présente invention ne se limite pas à l'exemple illustré mais est susceptible de diverses variantes et modifications qui apparaîtront à l'homme de l'art. En particulier, le procédé ne saurait se limiter aux deux modes de réalisation présentés dans la présente description. En effet, suivant les applications souhaitées, il pourrait être adapté pour obtenir des surfaces différentes.

## Revendications

1. Procédé de fabrication d'une pièce comportant les étapes suivantes :
- se munir d'une barre ;
- décolleter la barre pour former au moins un diamètre (22, 24, 26, 32, 42) comportant une surface (21, 31, 41) sensiblement verticale et une surface (23, 33, 43) sensiblement horizontale ;
**caractérisé en ce que** le procédé comporte en outre l'étape suivante :
- usiner ladite surface sensiblement horizontale afin de former une surface plane (35, 45) sous la surface sensiblement horizontale.

2. Procédé de fabrication d'une pièce comportant les étapes suivantes :
- se munir d'une barre ;
- décolleter la barre pour former au moins un diamètre (22, 24, 26, 32, 42) comportant une surface (21, 31, 41) sensiblement verticale et une surface (23, 33, 43) sensiblement horizontale ;
**caractérisé en ce que** le procédé comporte en outre l'étape suivante :
- usiner ladite surface sensiblement horizontale afin de réduire ladite surface sensiblement horizontale.

3. Procédé de fabrication d'un composant horloger comportant les étapes suivantes :
- former une première pièce (27, 37, 47) à base de métal à partir du procédé selon l'une des revendications précédentes et une deuxième pièce (15) ;
- monter une surface (21, 23, 31, 33, 41, 43) de la première pièce (27, 37, 47) sur une surface (18, 20) de la deuxième pièce (15) ;
- souder, par rayonnement électromagnétique du type laser, la surface (21, 23, 31, 33, 41, 43) de la première pièce (27, 37, 47) montée sur la surface (18, 20) de la deuxième pièce (15) afin de les solidariser.

4. Procédé selon la revendication précédente, **caractérisée en ce que** la deuxième pièce (15) est à base de silicium ou à base de céramique.

5. Procédé selon la revendication précédente, **caractérisée en ce que** la deuxième pièce (15) comporte en outre au moins un revêtement partiel de métal, d'oxyde de silicium, de nitrure de silicium, de carbure de silicium ou d'un allotrope du carbone.

6. Procédé selon l'une des revendications 3 à 5, **caractérisée en ce que** la première pièce (27, 37, 47) comporte un alliage de fer, un alliage de cuivre, du nickel ou un de ses alliages, du titane ou un de ses alliages, de l'or ou un de ses alliages, de l'argent ou un de ses alliages, du platine ou un de ses alliages, du ruthénium ou un de ses alliages, du rhodium ou un de ses alliages ou du palladium ou un de ses alliages.
